(19) **Europäisches Patentamt / European Patent Office / Office européen des brevets**

(11) **EP 4 101 634 B1**

(12) **EUROPEAN PATENT SPECIFICATION**

(45) Date of publication and mention
of the grant of the patent:
**06.11.2024 Bulletin 2024/45**

(21) Application number: **21750362.2**

(22) Date of filing: **05.02.2021**

(51) International Patent Classification (IPC):
**B32B 7/02** (2019.01)    **B32B 5/02** (2006.01)
**B32B 7/12** (2006.01)    **B32B 27/08** (2006.01)
**B32B 27/12** (2006.01)    **B32B 27/32** (2006.01)
**B32B 27/34** (2006.01)    **B60R 21/235** (2006.01)

(52) Cooperative Patent Classification (CPC):
**B60R 21/235; B32B 5/02; B32B 7/02; B32B 7/022;**
**B32B 7/027; B32B 7/12; B32B 25/08; B32B 25/10;**
**B32B 25/16; B32B 27/08; B32B 27/12;**
**B32B 27/18; B32B 27/20; B32B 27/306;**
**B32B 27/308;**                              (Cont.)

(86) International application number:
**PCT/JP2021/004459**

(87) International publication number:
**WO 2021/157733 (12.08.2021 Gazette 2021/32)**

(54) **MULTI-LAYER COMPOSITE BODY FOR AIRBAG AND AIRBAG**

MEHRSCHICHTIGER VERBUNDKÖRPER FÜR AIRBAG UND AIRBAG

CORPS COMPOSITE MULTICOUCHE POUR COUSSIN DE SÉCURITÉ GONFLABLE ET COUSSIN DE SÉCURITÉ GONFLABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.02.2020 JP 2020020128**

(43) Date of publication of application:
**14.12.2022 Bulletin 2022/50**

(73) Proprietor: **Asahi Kasei Kabushiki Kaisha**
**Tokyo 1000006 (JP)**

(72) Inventors:
• **ITO Miyuki**
**Tokyo 100-0006 (JP)**
• **KABEYA Takumi**
**Tokyo 100-0006 (JP)**

(74) Representative: **D Young & Co LLP**
**3 Noble Street**
**London EC2V 7BQ (GB)**

(56) References cited:
| | |
|---|---|
| EP-A1- 1 518 761 | WO-A1-2019/039555 |
| WO-A1-2020/032032 | WO-A1-98/41398 |
| JP-A- 2002 500 576 | JP-A- 2008 150 754 |
| JP-A- 2019 001 164 | KR-A- 20140 087 848 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**B32B 27/32; B32B 27/34; B32B 27/36;**
**B32B 27/40;** B32B 2250/02; B32B 2250/03;
B32B 2250/04; B32B 2250/05; B32B 2262/02;
B32B 2262/0223; B32B 2262/0246;
B32B 2262/0253; B32B 2262/0261;
B32B 2262/0269; B32B 2262/0276;
B32B 2262/062; B32B 2262/101; B32B 2262/103;
B32B 2262/105; B32B 2262/106; B32B 2274/00;
B32B 2307/7376; B32B 2605/08; B60R 2021/23514

**Description**

TECHNICAL FIELD

This disclosure relates to a multilayer complex used for an airbag for protecting an occupant in the vehicle, etc. (hereinafter, an airbag multilayer complex) and an airbag using it. In more detail, this disclosure relates to an airbag multilayer complex excellent in airtightness, adhesion, and durability, such that multilayer film is laminated on the surface of a synthetic fiber, and an airbag using it.

BACKGROUND

Various forms of airbags mounted on the vehicles, etc. have been put to practical use for the purpose of protecting occupants from impact. For example, airbags corresponding to head-on collision include a front airbag and a knee airbag for protecting the head and the leg of the occupant. Airbags corresponding to collision from the side include a side airbag for protecting the body of the occupant. Further, side-curtain airbags, etc. have been put to practical use for protecting the head of the occupant and preventing the occupant from being thrown out of the vehicle when the vehicle is overturned. Such various airbags are in widespread use in response to the increased safety awareness.

Such airbags have different required performances depending on the assumed danger condition. For example, the front airbag needs to remain inflated only at the moment of collision, while the side-curtain airbag needs to remain inflated for a longer period of time than the former to prevent the occupant from being thrown out of the vehicle at the time of overturn. Therefore, the airbag multilayer complex itself is required to have even higher airtightness.

Generally, the airbag multilayer complex consists of a base fabric (for example, a synthetic fiber layer consisting of a synthetic fiber) and an airtight layer. The base fabric is a layer as a support for maintaining a specific tertiary structure when a bag-shaped cushion, which has been stored in a folded state until collision, is deployed. In terms of flexibility, strength, heat resistance, flame retardance, etc., this layer uses the synthetic fiber made from polyamide fiber or polyester fiber. However, the base fabric itself consisting of such synthetic fiber has poor airtightness, thus it is difficult to promptly deploy the folded cushion and to make it remain inflated for the required amount of time. Therefore, in order to have the airtightness, the base fabric generally has a structure in which the airtight layer is formed on one surface.

The technique in such an airtight layer includes, for example, a coating-type airbag multilayer complex covered with a thermosetting silicon film and a laminating-type airbag multilayer complex covered with a resin film. This disclosure relates to the latter airbag multilayer film such that the resin film is laminated. PTLs 1 and 2 disclose the related techniques. PTL 3 discloses airbags comprising a composite sheet formed by a multilayer polyamide film having a melting point below 220°C bonded to a fabric. PTL 4 discloses airbags comprising a composite sheet comprising a multilayer polyamide film which is bonded to a polyamide textile layer. PTL 5 discloses airbags comprising a composite sheet comprising a fabric layer laminated to a thermoplastic resin layer. PTL 6 discloses airbags comprising a composite sheet comprising a Nylon fabric laminated via an adhesive layer having a melting point of 50-150°C to a polymeric layer having a melting point above 100°C

CITATION LIST

Patent Literature

PTL 1: JP2000296748A
PTL 2: EP1518761A
PTL 3: WO 98/41398 A1
PTL 4: EP 1 518 761 A1
PTL 5: JP 2008 150754 A
PTL 6: KR 2014 0087848 A

SUMMARY

(Technical Problem)

In the techniques in PTLs 1 and 2 above, an airbag multilayer complex is formed by film lamination covered with a resin film, thus large equipment is not required for manufacturing the resin film (for example, inflation molding). Also, in the case of thermal lamination of the resin film to the base fabric, the processing can be performed with relatively simple equipment and the processing speed is relatively fast, ensuing low cost manufacturing from the film manufacturing process to the thermal lamination process.

However, in the multilayer film consisting of an outer layer and an adhesive layer, disclosed in PTL 1 above, acid-modified polyolefin is used for the adhesive layer. However, the adhesive layer has poor affinity with polyamide fiber or polyester fiber, reducing the adhesive strength of the interface between the adhesive layer and the base fabric. Therefore, when the airbag rapidly inflates (also referred to as deploys), interface peeling between the adhesive layer and the base fabric is likely to occur.

PTL 2 discloses a technique using a low-melting-point polyamide elastomer consisting of polyamide 12 (hard segment) and polyether (soft segment) for the adhesive layer of the multilayer film. Such technique has improved the affinity between the base fabric and the adhesive layer, but there is still room for improvement in the durability because it is necessary to make the copolymerization rate of polyether relatively high to make the adhesive layer have a low melting point (for example, 150 °C or less).

As a specific example of this durability, for example, when a vehicle is continuously used for more than ten years, the airbag mounted on this vehicle is repeatedly subjected to vibration, friction, and heat shock that cause fatigue. As a result, the adhesive strength between the base fabric and the multilayer film of the airbag multilayer complex reduces over time and tends to be likely to peel off during the deployment. One of the evaluation methods for allowance for such repetition of load, that is, durability is a scrub test. This scrub test is a load testing method that the airbag multilayer complex is subjected to repeated expansion and contraction, and friction simultaneously to evaluate the number of times until the coating layer or resin film (also referred to as the multilayer film) is peeled off from the base fabric or damaged.

The durability evaluation by this scrub test found that the techniques in PTLs 1 and 2 could not obtain enough durability performance and this is a problem that should be improved in, in particular, an OPW (ONE PEACE WOVEN)-type airbag multilayer complex in which the airtight layer is disposed on the outer layer of the base fabric.

It could be helpful to provide an airbag multilayer complex excellent in flexibility and durability by controlling the adhesion between an adhesive layer and a base fabric to a predetermined range, and an airbag using it.

(Solution to Problem)

This disclosure is made based on consideration on the aforementioned problems. Amazingly, it was discovered that the flexibility of a multilayer film strongly affects the durability as a factor other than the adhesion, and it was found that the durability is improved by setting the balance of the flexibility of both of the multilayer film and the base fabric into a specific range, leading to this disclosure as below.

[1] This disclosure is an airbag multilayer complex including a base fabric and a multilayer film including an outer layer and an adhesive layer that is bonded to one surface of the base fabric. The adhesive strength of the interface between the multilayer film and the base fabric is 5 N/cm or more, the difference in loop stiffness between the airbag multilayer complex and the base fabric is 130 mN/cm or less, the adhesive layer contains a first resin having a hydrogen-bonding capacity, and the absolute value of the difference in Hansen solubility parameter ($\Delta$HSP) between the base fabric and the first resin is 5 $MPa^{0.5}$ or less. ("$\Delta$" represents delta in the Greek character.) The first resin has a glass transition temperature of 20 °C or more.

In the disclosed embodiment, it is preferable that the first resin is a polyamide-based copolymer of two or more types selected from polyamide 6, polyamide 66, polyamide 610, polyamide 11, and polyamide 12, and/or a dimer acid-based polyamide.

In this embodiment, it is preferable that the outer layer of the multilayer film contains a second resin, and the second resin has a melting point 20 °C or more than a melting point of the first resin contained in the adhesive layer.

In this embodiment, it is preferable that the second resin is a polyamide-based copolymer or/and a thermoplastic polyamide elastomer, a thermoplastic polyester elastomer, a thermoplastic polyurethane elastomer.

In this embodiment, it is preferable that there is a middle layer between the outer layer and the adhesive layer of the multilayer film, the middle layer contains a third resin, and the third resin contains a polyolefin-based resin having polarity.

In this embodiment, it is preferable that the multilayer film has an average thickness of 40 $\mu$m or less.

In this embodiment, it is preferable that the base fabric is a polyamide fiber.

This disclosure is an airbag using the airbag multilayer complex such that the multilayer film is bonded according to any of these mentioned embodiments.

(Advantageous Effect)

It can be provided an airbag multilayer complex excellent in flexibility and durability by controlling adhesion of the interface between an adhesive layer and a base fabric to a predetermined range.

The weight of the airbag can be reduced by using the airbag multilayer complex excellent in the durability.

BRIEF DESCRIPTION OF THE DRAWINGS

In the accompanying drawings:

FIG. 1 is a schematic view illustrating an adhesive strength test;
FIG. 2 is a schematic view illustrating a loop stiffness test;
FIG. 3 is a schematic view illustrating a method of forming a multilayer film; and
FIG. 4 is a schematic view illustrating a method of manufacturing an airbag multilayer complex.

DETAILED DESCRIPTION

The following describes the detail of embodiments for implementing this disclosure. However, this disclosure is not limited to the embodiments and examples, etc., which are described below, and can be arbitrarily changed to the extent not departing from the gist and equal scope of this disclosure.

"Airbag multilayer complex"

Our airbag multilayer complex includes a base fabric and a multilayer film including an outer layer and an adhesive layer that is bonded to one surface of the base fabric. The adhesive strength of the interface between the multilayer film and the base fabric is 5 N/cm or more, the difference in loop stiffness between the airbag multilayer complex and the base fabric is 130 mN/cm or less, and the absolute value of the difference in Hansen solubility parameter (ΔHSP) between the base fabric and a first resin having a hydrogen-bonding capacity contained in the adhesive layer of the multilayer film is 5 MPa$^{0.5}$ or less. This can provide an airbag multilayer complex excellent in durability. The airbag multilayer complex is also referred to herein simply as a "multilayer complex".

The airbag multilayer complex of this embodiment is a membrane body including a base fabric (for example, synthetic fiber) and a multilayer film covered on one surface of this base fabric. The airbag of this embodiment is preferably a bag body formed of the airbag multilayer complex.

The multilayer film of this embodiment consists of at least two layers. Among them, one layer adhered (or bonded) to the base fabric in the airbag multilayer complex is referred to as an "adhesive layer", and the other layer is referred to as an "outer layer". The "outer layer" corresponds to a layer exposed on the outside of the airbag. The expression "XX to YY" indicating a range means XX or more and YY or less.

In the airbag multilayer complex in this embodiment, the adhesive layer can be melted on at least one surface of the base fabric (for example, synthetic fiber) by heating the multilayer film to be solidly adhered to the surface of the base fabric.

In this embodiment, the adhesive strength at the interface between the multilayer film and the base fabric exhibits a specific value or more, making it difficult for the multilayer film to peel off from the base fabric, thereby providing the durability as an airbag. In this case, the lower limit of the adhesive strength of the interface between the multilayer film and the base fabric is 5 N/cm or more, preferably 6 N/cm or more, and further preferably 7 N/cm or more. The upper limit of the adhesive strength of the interface between the multilayer film and the base fabric is not particularly limited, but it is preferably, for example, 20 N/cm or less. The preferable range of this adhesive strength can be any combination of the above lower limit values and upper limit values. The breaking strength of the multilayer film is lower than the adhesive strength, thus the thinner the multilayer film is, the lower the apparent adhesive strength tends to be.

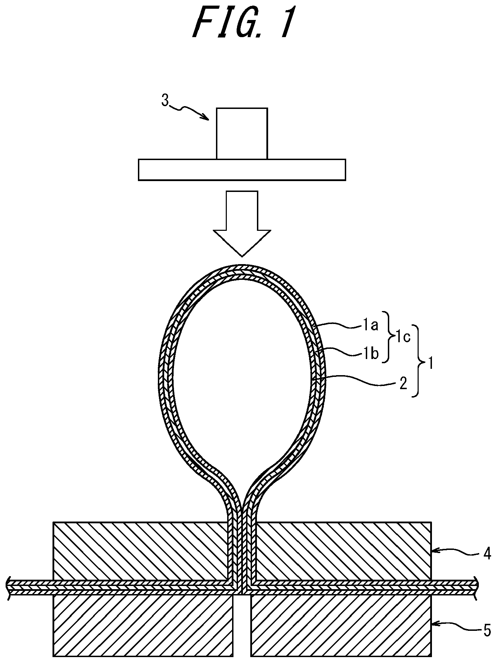

The "adhesive strength" herein is a peel strength when the peeling occurs between the multilayer film covering the surface of the base fabric, and this base fabric. Specifically, it was produced a sample of the airbag multilayer complex such that the multilayer film was adhered to the base fabric by partially applying predetermined temperature, pressure, and time in a state where the base fabric and the multilayer film were overlapped. The peel strength is a 180° T-type peel strength measured under the condition with a peel rate (tensile rate) of 5 mm/min by cutting out a sample with a width of 10 mm and a length of 80 mm from the airbag multilayer complex, setting the distance between chucks to 30 mm in a tensile tester, and grasping the multilayer film part and the base fabric part with the chucks so that the adhering site of the sample is at the center of the chucks. As the detailed conditions and method for the adhesive strength measurement, the measurement conditions described later in EXAMPLES and the method in FIG. 1 are employed.

The control factor of the adhesive strength includes, for example, (a) chemical bonding between the base fabric and the adhesive layer, (b) contact area between the base fabric and the adhesive layer, and (c) anchor effect expressed by penetrating between single yarns of a weft fiber bundle that constitutes the weft and the warp. Specifically, in (a), the chemical bonding can be controlled using the resin having a hydrogen-bonding capacity or/and by providing a corona treatment, a plasma treatment, a primer treatment, etc. In (b) and (c), the control factors can be controlled by the thermal lamination temperature, speed, pressure, and the melt viscosity of resin. By optimizing these conditions, the adhesive strength at the interface between the multilayer film and the base fabric can exhibit a specific value or more. As described later, one preferred example of this embodiment focuses on resins having the hydrogen-bonding capacity each other and specifies solubility parameters of the base fabric and the adhesive layer to control the differences in adhesive strength and loop stiffness in specific ranges.

In this embodiment, the difference between the loop stiffness of the entire airbag multilayer complex and the loop stiffness of the base fabric used for this airbag multilayer complex exhibits a specific value or less, increasing the flexibility of the multilayer film for the repetition of load. This improves the followability to expansion and contraction of the base fabric, resulting in the durability to meet practical use.

As a result of extensive studies on the durability of the airbag multilayer complex, which is the problem of this disclosure, it became clear that the flexibility of the multilayer film significantly affects the durability (scrub resistance). The "flexibility" here means a relative difference between the multilayer film and the base fabric and is expressed as a difference between "the loop stiffness value of the airbag multilayer complex" and "the loop stiffness value of the base fabric alone" obtained in accordance with the method of measuring the loop stiffness, which is described later.

The lower limit of the difference in loop stiffness between the airbag multilayer complex and the base fabric is preferably close to 0, and more preferably, for example, more than 0 mN/cm. The upper limit of the difference in loop stiffness between the airbag multilayer complex and the base fabric is, in terms of the scrub resistance and the flexibility, preferably 130 mN/cm or less, more preferably 120 mN/cm or less, and further preferably 110 mN/cm or less.

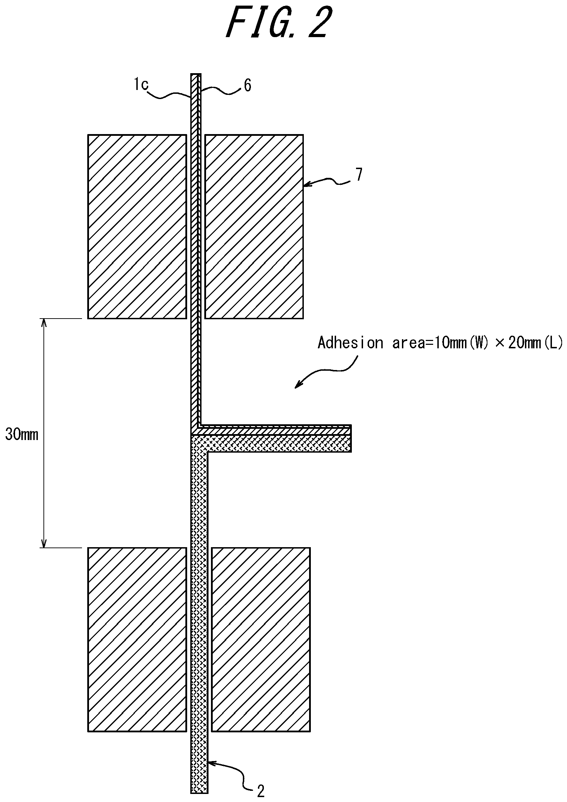

The "loop stiffness" herein is a stress required to fold the sample of the membrane body such as a film into a loop shape and compress it in the diametrical direction of the loop by a predetermined amount. The elasticity of the membrane body is evaluated by the value of this loop stiffness. The stress required to squash the loop by 30 mm was measured herein at a compression rate of 3.3 mm/sec using a loop stiffness tester (made by Toyo Seiki Seisaku-Sho, Ltd.) by setting the width of the sample to 20 mm and the length of the sample to 150 mm. The method in EXAMPLES and FIG. 2, which is described later, is employed as the detailed conditions for the loop stiffness measurement.

For example, if conditions are met such that (d) the thickness of the multilayer film is 40 $\mu$m or less, more preferably 35 $\mu$m or less, and further preferably 30 $\mu$m or less, and (e) the tensile modulus of elasticity of the multilayer film is 500 MPa or less, more preferably 400 MPa or less, and further preferably 300 MPa or less, the difference between the loop stiffness of the entire airbag multilayer complex and the loop stiffness of the base fabric used for this airbag multilayer complex tends to exhibit a specific value or less.

The following describes the multilayer film and the base fabric that constitute the airbag multilayer complex in detail.

(Multilayer film)

The multilayer film consists of two layers, at least the outer layer and the adhesive layer. The multilayer film may have a three-layer constitution of the adhesive layer, a middle layer, and the outer layer such that the middle layer is disposed between the outer layer and the adhesive layer. Alternatively, the multilayer film may have a four-layer constitution or a five-layer constitution of the adhesive layer, a glue layer, the middle layer, the glue layer, and the outer layer such that the glue layer is further disposed between the adhesive layer and the middle layer and/or between the outer layer and the middle layer.

It goes without saying that other layers other than the above may be further included.

For the multilayer film in this embodiment, the at least two layers: the outer layer and the adhesive layer that constitute this multilayer film may be made of an identical resin (two layers of one type) or different resins (two layers of two types). In the embodiment where the middle layer is disposed between the outer layer and the adhesive layer, the three layers: the adhesive layer, the middle layer, and the outer layer may be made of an identical resin or different resins (three layers of three types). Further, in the embodiment of the five-layer constitution of the adhesive layer, the glue layer, the middle layer, the glue layer, and the outer layer, similarly, the five layers may be made of an identical resin or different resins (five layers of five types).

As the method of measuring the layer ratio and the average thickness of the respective layers in the multilayer film, in the case of the multilayer film, for example, two polypropylene sheets (size: 5 mm $\times$ 10 mm) with a thickness of 1 mm, to which an EVA adhesive is applied, are prepared, the multilayer film is sandwiched between the two sheets such that the EVA adhesive surfaces are inside to be integrated, a section with 5 $\mu$m to 10 $\mu$m is picked by a microtome, and the cut surface of the section is magnified by a polarization microscopy, thus enabling the thickness of the adhesive layer to be measured using image analysis software.

The layer ratio and the average thickness in the case of the airbag multilayer complex in which the multilayer film is adhered to the surface of the base fabric can be calculated from melting peak areas (melting energies) of the respective layers preferably according to a DSC measuring method, which is described later, by separating the multilayer film from the base fabric.

(Adhesive layer)

The adhesive layer in this embodiment is a layer adhered to the surface of the base fabric, in more detail, a layer that melts under heat from a heating roll during the thermal lamination to be adhered to the surface of the base fabric. The adhesive layer in this embodiment contains the first resin having the hydrogen-bonding capacity. The absolute value of the difference in Hansen solubility parameter (ΔHSP) between the base fabric and the first resin is 5 MPa$^{0.5}$ or less.

This improves the adhesion between the base fabric and the first resin, providing the airbag multilayer complex excellent in the durability.

In the airbag multilayer complex of this embodiment, the absolute value of the difference between the Hansen solubility parameter (HSP) of the first resin and the Hansen solubility parameter (HSP) of the synthetic fiber that constitutes the base fabric (ΔHSP) meets 5 MPa$^{0.5}$ or less, preferably 4.5 MPa$^{0.5}$ or less, and more preferably 4.0 MPa$^{0.5}$ or less. The unit of ΔHSP is MPa$^{0.5}$. Making ΔHSP above in the above-described range improves the compatibility between the adhesive layer and the base fabric, making the adhesive strength of the interface between the multilayer film and the base fabric easier to meet the condition of 5 N/cm or more.

In this embodiment, the value of ΔHSP is calculated using "Winmostar version 9.3.0". That is, for the estimate value of HSP, the HSP value of the first resin, for example, a polyamide-based copolymer (PA6/12), and the HSP value of a polyamide 66 fiber most preferably used as a material of the base fabric are estimated using "Winmostar version 9.3.0", thus specifying the preferred range of ΔHSP.

In this embodiment, the "Hansen solubility parameter (HSP) of the first resin" means an HSP of the first resin having the hydrogen-bonding capacity.

The "Hansen solubility parameter (HSP) of the synthetic fiber" herein means an HSP of the synthetic fiber included in the base fabric. When there is a plurality of synthetic fibers in the base fabric, it can be a value obtained by multiplying the HSP of each fiber component (100 mass% in total) by the component percentage and summing them.

The adhesive layer in this embodiment consists of the adhesive layer component. This adhesive layer component contains the first resin, and contains a resin A described later and/or various additives, as necessary.

The glass-transition temperature of the adhesive layer in this embodiment is preferably 0 °C to 80 °C. The more preferred glass-transition temperature of the adhesive layer is 20 °C to 70 °C, and the further preferred glass-transition temperature of the adhesive layer is 30 °C to 60 °C. This provides the effect of blocking resistance and film-forming stability.

The meaning of "the glass-transition temperature of the adhesive layer is 0 °C or more and 80 °C or less" is herein that the glass-transition temperature of the resin contained in the adhesive layer component, which is a component that constitutes the adhesive layer, is 0 °C or more and 80 °C or less. When there is a plurality of peaks derived from the glass-transition temperature of the resin contained in the adhesive layer component, the peak temperature on the highest temperature side is set as the glass-transition temperature of the adhesive layer (= the glass-transition temperature of the component that constitutes the adhesive layer).

When the glass-transition temperature of the adhesive layer is 0 °C or more, in the film forming process, the adhesion to the roll, and the blocking of the outer layer and the adhesive layer of the rolled film can be reduced. On the one hand, when the glass-transition temperature of the adhesive layer is 80 °C or less, the flexibility of the film and the range of lamination temperature can be optimized.

In terms of the adhesion with the base fabric, the blocking property, and the film-forming stability, the glass-transition temperature of the first resin contained as the component of the adhesive layer is 20 °C or more.

The first resin in this embodiment may be a single resin or a mixture in which a plurality of resins are blended, and it may be a mixture in which other components having polarity are blended.

The glass-transition temperature of the above-described first resin is more preferably 20 °C to 80 °C, further preferably 20 °C to 70 °C, and even further preferably 30 °C to 60 °C. The use of the first resin with a glass-transition temperature of 20 °C or more for the adhesive layer provides the effect of higher blocking resistance and film-forming stability.

The above-described glass-transition temperature can be measured by the method described in EXAMPLES below. In more detail, the method of measuring the glass-transition temperature of the adhesive layer is that, after producing a sheet body with a thickness of 0.9 mm from the adhesive layer component, the loss tangent tan δ is measured in a dynamic viscoelastic measuring machine ("MCR301" made by Anton Paar GmbH), and the peak temperature of the loss tangent tan δ is set as the glass-transition temperature.

- Measurement mode: torsion (measurement attachment: SRF10)
- Sample: thickness = 0.9 mm, width = 10 mm, measuring span = 38 mm
- Normal force: -0.3 N
- Oscillation angle: 0.1 %
- Frequency: 1 Hz
- Heating rate: 2 °C/min

When there is a plurality of the first resins, the glass-transition temperatures of the respective first resins may be comparable or different.

Further, the adhesive layer component may contain a plurality of resins (for example, polyamide-based resin or resin A, which is described later), or the adhesive layer component may contain various additives.

The melting point of the above-described first resin is preferably 100 °C to 160 °C, more preferably 110 °C to 150 °C, and further preferably 120 °C to 140 °C. Setting the melting point to 100 °C or more can maintain the adhesive strength with the base fabric even under the usage environment at a high temperature and expand the range (also referred to as process window) of conditions such as the temperature, the pressure, and the time during the lamination, thus obtaining the multilayer film having a stable quality. On the one hand, setting the melting point to 160 °C or less can obtain an appropriate flexibility. The above-described melting point can be measured by the method described in EXAMPLES below. When there is a plurality of the above-described first resins, the melting points of the respective first resins may be comparable or different. When there is a plurality of the first resins and there is a plurality of melting peaks, the melting peak temperature on the high temperature side of the first resin is preferably 100 °C to 160 °C, and more preferably 110 °C to 150 °C.

The "first resin" herein means a resin having the hydrogen-bonding capacity (amino group, amide bond, or hydroxy group, etc.).

In this embodiment, the adhesive layer or the adhesive layer component may contain another resin (also referred to as "resin A" herein) other than the above-described first resin. The above-described first resin and the above-described resin A may include one type or a plurality of types.

The above-described adhesive layer or the adhesive layer component may consist of only the first resin or may further contain the above-described resin A and/or the additive described later, but the first resin is contained preferably 30 mass% or more, more preferably 40 mass% or more, further preferably 50 mass% to 100 mass%, and even further preferably 60 mass% or more and 98 mass% or less, of the total 100 mass% of the adhesive layer or the adhesive layer component.

The glass-transition temperature of the first resin is preferably 80 °C or less, more preferably 70 °C or less, and further preferably 60 °C or less, and if the first resin is contained 30 mass% or more, more preferably 50 mass% or more, and further preferably 70 mass% or more, of the adhesive layer (100 mass%), excellent flexibility and adhesive strength are provided.

In this embodiment, the first resin specifically includes a polyamide-based resin, a polyurethane-based resin, etc., and in terms of the hydrolyzability, the polyamide-based resin can be preferably used.

The polyamide-based resin includes a polyamide-based copolymer of two or more types selected from polyamide 4 (Hereinafter, also referred to as PA4. Other polyamides are similarly referred to by PA numbers.), polyamide 6 (PA6), polyamide 66 (PA66), polyamide 11 (PA11), polyamide 12 (PA12), polyamide 46 (PA46), polyamide 66 (PA66), and polyamide 610 (PA610) and/or a dimer acid-based polyamide obtained using a dimer acid as raw material. In terms of the flexibility and the range of thermal lamination temperature, PA6/12 (copolymer of polyamide 6 and polyamide 12), PA6/66/12, PA6/66/610/12, and the dimer acid-based polyamide are more preferable, and PA6/12 is further preferable.

PA6/12 above is, in terms of the adhesive strength, the lamination aptitude, and the blocking resistance during the film-forming, preferably a polyamide-based copolymer consisting of a component with 5 mass% to 70 mass% of polyamide 6 and a component with 95 mass% to 30 mass% of polyamide 12, and more preferably a polyamide-based copolymer consisting of a component with 10 mass% to 60 mass% of polyamide 6 and a component with 90 mass% to 40 mass% of polyamide 12.

The above-described polyamide-based resin includes a random copolymer, an alternate copolymer, a block copolymer, or a graft copolymer, and the block copolymer or the random copolymer are more preferable.

On the one hand, as a urethane-based resin, in terms of the flexibility, a thermoplastic polyurethane elastomer is preferable, and a polyether-based thermoplastic polyurethane having relatively good hydrolyzability is particularly preferable.

The content of each repeating unit in the polyamide-based resin can be calculated from the integral ratio of spectrum at the measurement in a nuclear magnetic resonance ($^1$H-NMR, $^{13}$C-NMR) measurement device.

In this embodiment, the viscosity number of the polyamide-based resin is, in terms of film formability, preferably 50 ml/g to 200 ml/g, more preferably 80 ml/g to 180 ml/g, and further preferably 100 ml/g to 150 ml/g. The viscosity number is a value obtained according to ISO307, and it is a viscosity number when 0.5 mass% of polyamide-based resin is dissolved in 96% sulfuric acid aqueous solution.

In the above-described adhesive layer, the first resin contained in this adhesive layer may be a mixed resin layer containing the resin A described later other than the above-described polyamide-based resin or polyurethane-based resin. The resin A preferably includes an acid-modified polyolefin, an ionomer, a thermoplastic polyamide elastomer, etc. In terms of the flexibility and the adhesion under the low-temperature environment, it is preferable that the glass-transition temperature is less than 0 °C, and the melting point is in a range of 80 °C to 160 °C. The mass percentage of the above-described resin A in the above-described adhesive layer or adhesive layer component (100 mass%) is, in terms of the adhesion, preferably 0 mass% to 70 mass%, more preferably 5 mass% to 60 mass%, and further preferably 10 mass% to 50 mass%.

In this embodiment, the adhesive layer or the adhesive layer component may appropriately contain various additives such as an organic solvent, an antiblocking agent, a lubricant, a crystal nucleating agent, a flame retardant, an antistatic agent, an antioxidant, an ultraviolet absorber, a light stabilizer, a coloring agent, and a filler to the extent that practical properties are not impaired.

The above-described antiblocking agent includes organic particles such as cross-linked polystyrene, cross-linked acryl (PMMA) resin, and fluorine (PTFE) particles and inorganic particles such as silica-based particles, kaolin, and calcium carbonate. The above-described crystal nucleating agent includes talc, alumina, kaolin, high-melting-point polyamide (for example, polyamide with a melting point of more than 160 °C), etc. The above-described lubricant includes aliphatic amide, metallic soap, super-high-molecular silicone, etc.

The mass percentage of the above-described additive in the above-described adhesive layer or adhesive layer component (100 mass%) is, in terms of the adhesion, preferably 20 mass% or less, more preferably 10 mass% or less, and further preferably 5 mass% or less.

The average thickness of the adhesive layer in this embodiment is, in terms of the adhesive strength and the flexibility, preferably 1 $\mu$m to 20 $\mu$m, more preferably 2 $\mu$m to 15 $\mu$m, and further preferably 3 $\mu$m to 10 $\mu$m.

As the method of measuring the average thickness of the adhesive layer herein, in the case of the multilayer film, for example, two polypropylene sheets (size: 5 mm × 10 mm) with a thickness of 1 mm, to which the EVA adhesive is applied, are prepared, the multilayer film is sandwiched between the two sheets such that the EVA adhesive surfaces are inside to be integrated, a section with 5 $\mu$m to 10 $\mu$m is picked by the microtome, and the cut surface of the section is magnified by the polarization microscopy, thus enabling the thickness of the adhesive layer to be measured using the image analysis software.

In the case of the airbag multilayer complex, by the DSC measuring method described later with the peeled multilayer film, the layer ratio in the multilayer film can be obtained from the melting point peak area (melting energy) derived from the adhesive layer.

(Outer layer)

The outer layer in this embodiment is a layer facing the adhesive layer and corresponds to the outermost surface of the airbag. The outer layer, in terms of fusion prevention and pinhole reduction during the thermal lamination, preferably consists of a resin having a melting point higher than that of the adhesive layer. Specifically, the outer layer in this embodiment preferably contains a second resin having a melting point 20 °C or more, more preferably 30 °C or more, and further preferably 40 °C or more than the melting point of the first resin contained in the adhesive layer.

The melting point of the above-described second resin is preferably 170 °C to 240 °C, more preferably 180 °C to 230 °C, and further preferably 190 °C to 220 °C. Setting the melting point to 170 °C or more makes the melting point 20 °C or more than the melting point of the adhesive layer or the first resin, reducing the fusion and the pinholes during the thermal lamination. Setting the melting point of the second resin to 240 °C or less can obtain appropriate melt tension during the film manufacturing to achieve stable film forming. The above-described melting point can be measured by the above-described method and the method described in EXAMPLES below. This second resin, similarly to the first resin, may be a single resin or a mixture in which a plurality of resins are blended, and it may be a mixture in which other components having polarity are blended. When there is a plurality of the above-described second resins, the melting points of the respective second resins may be comparable or different. When there is a plurality of the above-described second resins and there is a plurality of melting peaks, the melting peak temperature on the high temperature side of the second resin is preferably 170 °C to 240 °C, and more preferably 180 °C to 230 °C.

The glass-transition temperature of the above-described second resin is preferably 80 °C or less, further preferably 70 °C or less, and even further preferably 60 °C or less. The use of the second resin with a glass-transition temperature of 80 °C or less for the outer layer provides the effect of the flexibility. The above-described glass-transition temperature can be measured by the method described in EXAMPLES below. When there is a plurality of the above-described second resins, the glass-transition temperatures of the respective second resins may be comparable or different.

This second resin, in terms of the heat resistance and the flexibility, includes a polyamide-based resin, a polyester-based resin, a polyurethane-based resin. This polyamide-based resin is preferably a polyamide-based copolymer and/or a polyamide-based elastomer. The polyamide-based resin includes the polyamide-based copolymer of one type or two or more types selected from PA4, PA6, PA11, PA12, PA46, PA66, PA610, and PA1010, the dimer acid-based polyamide, which are listed in the description of the above-described adhesive layer, a polyamide-based elastomer consisting of a polyamide component and a polyether component or a polyester component (so-called thermoplastic polyamide elastomer), and a dimer acid-based polyamide-based elastomer consisting of the dimer acid-based polyamide and the polyether component. The polyamide-based resin may be one of these polyamide-based resin and thermoplastic polyamide elastomer or a mixture in which a plurality of these resins are blended. In terms of the flexibility and the heat resistance, PA6/66, PA6/12, PA6/66/12, PA1010, the thermoplastic polyamide-based elastomer, or the dimer acid-based polyamide elastomer is more preferable, and PA6/66, PA6/66/12, PA1010, or the thermoplastic polyamide elastomer is further preferable.

The polyester-based resin includes a thermoplastic polyester elastomer, a thermoplastic ester/ester elastomer, etc. having the polyester component as a hard segment and the polyether component or the polyester component as a soft segment. Further, the polyurethane-based resin is included. The polyurethane-based resin is, in terms of the flexibility, preferably the thermoplastic polyurethane elastomer. The polyurethane-based resin includes more preferably a polyester-based or polyether-based thermoplastic polyurethane elastomer and further preferably, in terms of the hydrolyzability, a polyether-based thermoplastic polyurethane elastomer.

The average thickness of the outer layer in this embodiment is, in terms of the durability, the flexibility, and the pinhole reduction during the thermal lamination, preferably 2 $\mu$m to 20 $\mu$m, more preferably 3 $\mu$m to 15 $\mu$m, and further preferably 5 $\mu$m to 10 $\mu$m.

The method of measuring the average thickness of the outer layer herein can be a method similar to the above-described "method of measuring the average thickness of the adhesive layer".

(Middle layer)

For the multilayer complex in this embodiment, the middle layer may be disposed between the adhesive layer and the outer layer, as necessary. This middle layer preferably contains a third resin in terms of the flexibility. The third resin is preferably a polyolefin-based resin having the polarity. As a specific example, the third resin includes polyethylene such as low-density polyethylene (LDPE), high-density polyethylene (HDPE), or linear low-density polyethylene (LLDPE), an ethylene-vinyl acetate copolymer (EVA), a polyolefin block copolymer (OBC), a thermoplastic olefinic elastomer (TPO), an ionomer, an acid-modified polyolefin-based resin, a thermoplastic polyamide elastomer (TPAE), a thermoplastic polyester elastomer (TPEE), a thermoplastic polyurethane elastomer (TPUE), a thermoplastic styrene-based elastomer, a styrene butadiene styrene (SBS), a hydrogenated styrene butadiene styrene elastomer (SEBS), or a hydrogenated styrene isoprene styrene elastomer (SEPS), an acrylic elastomer, etc. This third resin can be used alone or as a composition in which a plurality of types are blended, for the middle layer.

The above-described middle layer may consist of only the third resin or may further contain the above-described resin A and/or the above-described additive, but the third resin is contained preferably 70 mass% or more, and more preferably 80 mass% or more and 100 mass% or less, of the total 100 mass% of the middle layer.

The average thickness of the middle layer in this embodiment is preferably 1 $\mu$m to 30 $\mu$m, more preferably 2 $\mu$m to 28 $\mu$m, and further preferably 3 $\mu$m to 25 $\mu$m. Setting the average thickness to 1 $\mu$m or more improves the flexibility. Setting the average thickness to 30 $\mu$m or less proportionally increases the thickness of the outer layer or/and the adhesive layer, improving the properties such as the pinhole resistance and the mechanical strength. In the case of the layer constitution including the middle layer, according to the required performance at the position on which the airbag is mounted, the thickness of the middle layer can be arbitrarily set within a preferred range.

(Glue layer)

The multilayer complex in this embodiment may further include the glue layer as a layer formed for adhering the above-described respective layers (the outer layer, the middle layer, and the adhesive layer). Therefore, as this glue layer, a resin having relatively high polarity is preferably used. This glue layer includes, for example, a layer containing an acid-modified polyolefin-based resin or/and a thermoplastic olefinic elastomer having a functional group having the polarity such as acid-modified polyethylene or acid-modified polypropylene, as a major component, or a layer containing a polyamide-based thermoplastic elastomer (TPAE) or polyester-based thermoplastic elastomer (TPEE) as a major component, and it is preferably selected considering the requirement for the heat resistance, etc. in the used application. The above-described glue layer may be a layer consisting of only one type of resin or a layer containing a plurality of types of resin. The resin used for the glue layer preferably has a heat resistance of 100 °C or more.

The above-described description "as a major component" means containing 50 mass% or more of the total 100 mass% of the glue layer. The glue layer may contain the above-described resin A and/or the above-described additive, as necessary.

In the preferred aspect in this embodiment, when the middle layer is disposed in the layer between the outer layer and the adhesive layer, the glue layer may be disposed as a layer for adhering the outer layer to the middle layer or/and the adhesive layer to the middle layer.

The average thickness of the glue layer in this embodiment is preferably 1 $\mu$m to 10 $\mu$m, more preferably 1.5 $\mu$m to 8 $\mu$m, and further preferably 2 $\mu$m to 6 $\mu$m.

Setting the average thickness of the glue layer to 1 $\mu$m or more eliminates the lack of the glue layer, reducing the delamination and further improving the flexibility. Setting the average thickness of the glue layer to 10 $\mu$m or less proportionally increases the thickness of the outer layer or/and the adhesive layer, improving the pinhole resistance and the mechanical strength. In the case of the layer constitution including the glue layer, according to the required performance at the position on which the airbag is mounted, the thickness of the glue layer can be arbitrarily set within a preferred range.

(Base fabric)

The base fabric in this embodiment is a support that supports the multilayer film in the airbag multilayer complex, which maintains a specific tertiary structure when the airbag is deployed. This base fabric is required to have the heat resistance to withstand the high-temperature gas from the inflator, the deployment property, the strength to withstand rapid inflation or impact, the airtightness, and the storability. Therefore, the base fabric in this embodiment is preferably formed of the synthetic fiber and it is preferably a synthetic fiber fabric.

The synthetic fiber is contained preferably 20 mass% or more, and more preferably 50 mass% or more and 100 mass% or less, of the total (100 mass%) of this base fabric.

The synthetic fiber that constitutes the above-described base fabric or the above-described synthetic fiber fabric includes, for example, a polyamide fiber, a polyester fiber, a polyolefin-based fiber, a chlorine-based fiber, a fluorine-based fiber, a polyacetal-based fiber, a polysulphone-based fiber, a polyphenylene sulfide-based fiber (PPS), a polyetheretherketone-based fiber (PEEK), a wholly aromatic polyamide-based fiber, a wholly aromatic polyester-based fiber, a polyimide-based fiber, a polyetherimide-based fiber, a polyparaphenylenebenzobisoxazole-based fiber (PBO), a vinylon-based fiber, an acrylic-based fiber, a cellulose-based fiber, a silicon carbide-based fiber, an alumina-based fiber, a glass-based fiber, a carbon-based fiber, and a steel-based fiber. Among them, the fiber having the hydrogen-bonding capacity is preferable, and in terms of the strength, the specific gravity, the cost, the adhesive strength with the multilayer film, etc., the polyamide fiber is more preferable.

In this embodiment, the total fineness of the fiber that constitutes the base fabric is preferably 100 dtex to 1000 dtex, more preferably 210 dtex to 570 dtex, and further preferably 330 dtex to 490 dtex. Setting the total fineness to 100 dtex or more can withstand the tension during the deployment and inflation. Setting the total fineness to 1000 dtex or less makes the fabric flexible, improving the storability and enabling high-speed deployment.

In this embodiment, the fineness of the single yarn that constitutes the base fabric is preferably 0.5 dtex to 8 dtex, and more preferably 1.5 dtex to 3.7 dtex. Setting the fineness of the single yarn to 0.5 dtex or more can reduce warp fluffing during the weaving. Setting the fineness of the single yarn to 8 dtex or less can make the fabric having the flexibility.

In this embodiment, the cover factor (CF) of the base fabric is, in terms of both mechanical property and hardness, preferably 1800 to 2400, more preferably 1900 to 2300, and further preferably 1900 to 2200. The CF of 1800 or more can obtain the base fabric strength required for the airbag. On the one hand, such as the CF of 2400 or less, the smaller the CF is, the softer the base fabric is. Further, the smaller the CF is, the lighter the fabric weight per unit area is, thus the CF is preferably 2300 or less.

Normally, the smaller the CF is, the more ventilation gaps occur between the woven yarns, but having a laminate cover can reduce ventilation. The CF is expressed by the following formula (1).

$$ CF = (0.9 \times d)^{1/2} \times (2 \times W) \qquad (1) $$

(In the above-described mathematical formula (1), d is the total fineness (dtex) on average of the warp and the weft of constituent yarns, and W is the weave density (yarns/2.54 cm) on average of the warp and the weft.)

The average thickness of the base fabric in this embodiment is preferably 0.15 mm to 0.45 mm, more preferably 0.17 mm to 0.40 mm, and further preferably 0.20 mm to 0.35 mm. Setting the average thickness of the base fabric to 0.15 mm or more can withstand the heat or the stress during the deployment and inflation. Setting the average thickness of the base fabric to 0.40 mm or less improves the storability.

The thickness measurement is compliant with ISO5084, and the value is measured at a setting pressure of 1 kPa and a gauge head of $\varphi$10.5 mm.

(Thickness)

In this embodiment, the flexibility of the multilayer film significantly affects the durability (scrub resistance). For example, the airbag multilayer complex in which the multilayer film having high flexibility is laminated on the base fabric (also referred to as laminate base fabric) can obtain the performance excellent in the scrub resistance. Its mechanism has not been clarified, but it is assumed that the resistance of the multilayer film that occurs when the airbag multilayer complex undergoes expansion and contraction deformation increases in proportion to the thickness, making it difficult for the multilayer film to follow the deformation of the base fabric. The thinner the thickness of the multilayer film is, the better the flexibility is, improving the scrub resistance.

The average thickness of the multilayer film in this embodiment is, as above described, one of the important factors that affects the flexibility, and it also significantly affects the result of the scrub test. As a guide for the scrub resistance, the multilayer film is required to withstand 600 or more tests. In terms of the scrub resistance, the upper limit of the average thickness of the multilayer film is preferably 40 $\mu$m or less, more preferably 35 $\mu$m or less, and further preferably 30 $\mu$m or less. In terms of the adhesive strength described later, the lower limit of the average thickness of the multilayer film is 5 $\mu$m or more, more preferably 10 $\mu$m or more, and further 15 $\mu$m or more.

The range of the average thickness of the multilayer film in this embodiment can be any combination of the above-described upper limit values and the above-described lower limit values. However, for example, it is preferably 5 $\mu$m to 40 $\mu$m, and more preferably 10 $\mu$m to 35 $\mu$m.

The average thickness of the airbag multilayer complex in this embodiment can be arbitrarily set considering the required properties at the mounted position, the flexibility, and the mechanical strength. However, it is preferably 100 $\mu$m to 500 $\mu$m, more preferably 150 $\mu$m to 450 $\mu$m, and further preferably 200 $\mu$m to 400 $\mu$m. The thickness measurement is compliant with ISO5084, and the value is measured at a setting pressure of 1 kPa and a gauge head of $\varphi$ 10.5 mm.

(Each layer ratio)

In order to express high adhesion to the base fabric, only the anchor effect of the adhesive layer, which is expressed by penetrating inside a plurality of single yarn structures that constitute the weft and the warp that constitute the base fabric, is insufficient, and the chemical bonding (for example, hydrogen bonding) to the single yarn, the intermolecular attractive force (van der Waals force), the contact area, etc. are important. If the contact area is small, the adhesive strength by this chemical bonding, etc. cannot withstand the internal pressure that occurs when the airbag multilayer complex deploys, and the pinholes occur due to ductile fracture of the film during the peeling, having a possibility that the function required for the airbag cannot be enough provided.

In order to obtain sufficient adhesive strength with the base fabric in the preferred range of the multilayer film in this disclosure, when the average thickness of the multilayer film is 100 %, the lower limit of the layer ratio of the adhesive layer is 1 % or more, more preferably 5 % or more, and further preferably 10 % or more. The upper limit of the layer ratio of the adhesive layer is, in terms of the flexibility, 50 % or less, more preferably 40 % or less, and further preferably 30% or less. Similarly, in terms of the durability and the pinhole prevention during the lamination, the lower limit of the layer ratio of the outer layer is 5 % or more, more preferably 10 % or more, and further preferably 20 % or more. The upper limit of the layer ratio of the outer layer is, in terms of the flexibility, 50 % or less, more preferably 40 % or less, and further preferably 30 % or less.

This enables appropriate setting when the middle layer and the glue layer are disposed between the outer layer and the adhesive layer, considering the flexibility of the multilayer film, the penetration of the resin into the base fabric during the lamination, the film formability of the multilayer film, etc.

In more detail, in the case of a two-layer structure of the outer layer and the adhesive layer, the preferred range of the ratio of the average thickness of each layer is 5 % to 95 % for the outer layer and 95 % to 1 % for the adhesive layer. In the case of three layers of three types, the range of the ratio of the average thickness of each layer is 5 % to 45 % for the outer layer, 90 % to 5 % for the middle layer, and 1 % to 90 % for the adhesive layer, and it can be set according to the required properties. In the case of five layers of four types or five layers of five types, the range of the ratio of the average thickness of each layer is 5 % to 20 % for the outer layer, 1 % to 10 % for the glue layer, 40 to 88 % for the middle layer, 1 % to 10 % for the glue layer, and 1 % to 20 % for the adhesive layer, and it can be set according to the required properties.

(Airbag)

The airbag of this embodiment is preferably a bag body formed of the above-described airbag laminated complex. In other words, the airbag of this embodiment is preferably a bag-shaped airbag laminated complex in which the above-described adhesive layer in the above-described multilayer film is adhered to the above-described base fabric, and the multilayer film is laminated on at least one surface of the base fabric.

The method of manufacturing the above-described airbag includes the thermal lamination method (roll lamination method), which uses a heating roll to apply laminate continuously in a roll-to-roll process, the vacuum lamination method, which applies laminate under reduced pressure, the belt lamination method, which applies laminate while pressing with a double belt, etc. The above-described adhesive layer of the above-described multilayer film is preferably continuously laminated on the above-described synthetic fiber fabric (base fabric), for example, by the roll lamination method or the belt lamination method in a heating temperature range of 120 °C to 190 °C.

The above-described airbag can be used as an airbag for vehicle, such as a front airbag, a side airbag, a side-curtain airbag, a far-side airbag, and an external airbag. Among them, the side-curtain airbag protects the occupant from the impact at the time of the side collision and is further required to have a function that prevents the occupant from being released from the side roof at the time of overturn. The far-side airbag is disposed between the occupant and the other occupant to mitigate the impact at the time of overturn. The side-curtain airbag and the far-side airbag are, as described above, required to maintain the inflation state for a longer time by assuming the overturn of vehicle, compared with the front airbag. Therefore, it is preferable that the adhesive strength between a barrier material and the base fabric as well as the airtightness are further enhanced. The airbag multilayer complex of this embodiment can be more preferably used for the above-described barrier material.

EXAMPLES

The following specifically describes this embodiment with Examples, but this embodiment is not limited to Examples described later.

1. "Raw material"

The raw materials used in Examples and Comparative Examples and their notations are listed below. The glass-transition temperature (sometimes referred to as Tg) and the melting point (sometimes referred to as Tm) of each raw material are values obtained using the dynamic viscoelastic measuring machine and the DSC, which are described later.

<Raw material used for adhesive layer>

(Resin component)

The resin components added to the adhesive layer are listed below.

- Co-PA1: product name "Ube Nylon 7128B" (made by Ube Industries, Ltd.) polyamide-based copolymer (PA6/12) (Tg = 47 °C, Tm = 128 °C, viscosity number = 117 ml/g)
- Co-PA2: product name "Griltex 2A" (made by EMS-CHEMIE) polyamide-based copolymer (PA6/66/12) (Tg = 40 °C, Tm = 118 °C)
- L-TPAE: product name "Ubesta XPA9040F1" (made by Ube Industries, Ltd.) low-melting-point thermoplastic polyamide elastomer (Tg = -43 °C, Tm = 136 °C)
- Co-PA1/m-PE1 = 49 mass%/51 mass% (resin composition equivalent to that in Example 4) (Tg = 29 °C, Tm = 125 °C)

(Additive)

The additives added to the adhesive layer are listed below.

- AB (antiblocking agent (AB agent)): product name "SILTON JC-70" (made by Mizusawa Industrial Chemicals, Ltd.), component name: sodium calcium aluminosilicate, shape: spherical, average particle size: 7 $\mu$m
- NA (crystal nucleating agent (NA agent)): product name "MICRO ACE P-8" (made by NIPPON TALC Co., Ltd.), component name: talc, shape: squamous, average particle size: 3.3 $\mu$m

To add this additive to the above-described resin component, a masterbatch containing 5 mass% of the additive was preliminarily melt-kneaded using a twin screw extruder "TEM-18SS" made by Toshiba Machine Co., Ltd. at a temperature of 180 °C and a screw rotation speed of 100 rpm to be pelletized. Then, this pellet (masterbatch) was dry-blended with the resin component. After this, the multilayer film was formed using the method described later by the inflation method.

<Raw material used for glue layer>

- m-PE1: product name "Admer NF587" (made by Mitsui Chemicals, Inc.) acid-modified polyethylene (Tg = -24 °C, Tm = 121 °C)

<Raw material used for middle layer>

- LLDPE: product name "Umerit 3570FC" (made by UBE-MARUZEN POLYETHYLENE) metallocene-based polyethylene (Tg < -70 °C, Tm = 122 °C)
- OBC: product name "INFUSE 9500" (made by The Dow Chemical Company) polyolefin block copolymer (Tg = -51 °C, Tm = 120 °C)
- m-PE1: product name "Admer NF587" (made by Mitsui Chemicals, Inc.) acid-modified polyethylene (Tg = -24 °C, Tm = 121 °C)

<Raw material used for outer layer>

- PA6/66: product name "Ube Nylon NAV503X10" (made by Ube Industries, Ltd.) polyamide-based copolymer (PA6/66) (Tg = 43 °C, melting point = 190 °C, viscosity number = 249 ml/g)
- H-TPAE: product name "Ubesta XPA9063F1" (made by Ube Industries, Ltd.) high-melting-point thermoplastic polyamide elastomer (Tg = 22 °C, Tm = 172 °C)

The following describes the method of measuring each physical property.

<Raw material used for base fabric>

The following synthetic fiber (Ny66 base fabric) was used as the base fabric used in Examples and Comparative Examples.

- Base fabric material = polyamide (also referred to as nylon) 66 fiber
- Fineness = 235 dtex,
- Number of single yarns = 72
- Fiber density: warp = 76 yarns/inch, weft = 74 yarns/inch

2. "Method of manufacturing airbag multilayer complex"

(1) Method of producing multilayer film

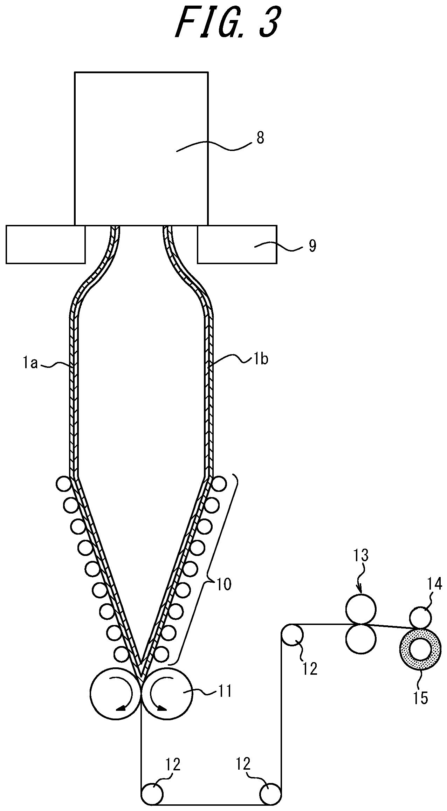

Using a multilayer circular die, two stacked desired resin films were rolled up around a 3-inch paper tube by the inflation method as described in FIG. 3. At this time, the film was formed so that a layer 1b on the inner side of the tubular film is an adhesive layer and a layer 1a on the outer side is an outer layer. The film forming conditions are as follows.

<Film forming condition of multilayer film>

- Die temperature setting: 220 °C
- Circular die: lip external form = 95 mm, lip clearance = 3 mm
- Blow-up ratio: 1.1 times
- Airing temperature: 25 °C
- Film surface temperature just before pinch roll: 35 °C
- Distance between circular die and pinch roll: 2.4 m
- The take-over speed was variable according to the thickness of the multilayer film. For example, in the case of the thickness of 40 $\mu$m, the take-over speed is 12 m/min. In the case of the thickness of 20 $\mu$m, the take-over speed is 24 m/min.

(2) Method of producing airbag multilayer complex

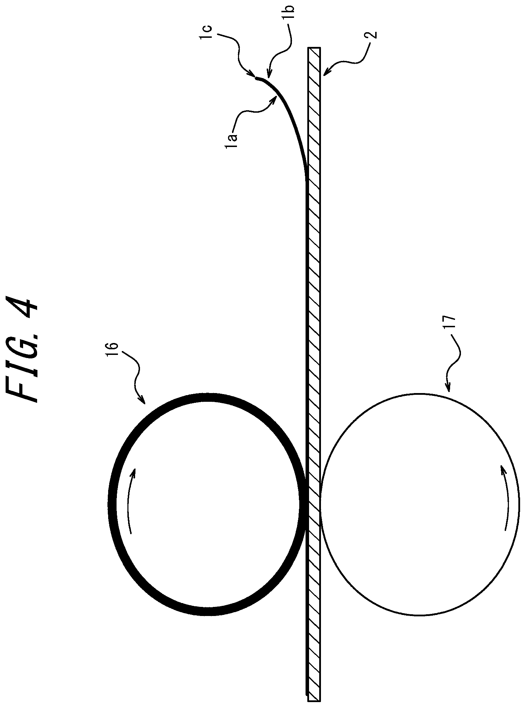

Referring to FIG. 4, the following describes the method of producing the airbag multilayer complex used in Examples and Comparative Examples.

Between a pair of roll parts consisting of a heating roll 17 and a press roll 16, which is covered with a silicone rubber, a multilayer film 1c was disposed on a base fabric 2 so as to contact the surface of the press roll 16 to be sandwiched between the rolls 16 and 17, which were rotating, thus performing the lamination such that almost all of one surface of the base fabric was covered with the multilayer film at predetermined temperature, pressure, and speed. The specific method is described in detail bellow.

(Multilayer complex for scrub resistance evaluation, multilayer complex for loop stiffness measurement)

In the case of the sample for the scrub resistance evaluation, and the airbag multilayer complex provided for the loop stiffness measurement, the sizes of the base fabric 2 and the multilayer film 1c (1a, 1b) are as follows. The multilayer film 1c (1a, 1b) was taken with a size of 250 mm in the MD (Machine Direction) direction and 110 mm in the TD (Transverse Direction) direction. The base fabric was taken with 260 mm in the warp direction and 120 mm in the weft direction.

After this, the MD direction of the taken multilayer film and the warp direction of the taken base fabric were oriented in the identical direction, and the multilayer film and the base fabric were overlapped such that the adhesive layer 1b of the multilayer film contacts the base fabric 2. Next, in a laminator set to the predetermined conditions, the multilayer film and the base fabric were aligned so that the TD direction of the multilayer film 1c (1a, 1b) (the weft direction of the base fabric 2) was parallel to the face length direction (direction of the width of 540 mm) of the heating roll 17 and the press roll 16, and were oriented so that the multilayer film 1c (1a, 1b) contacts the press roll 16 to be sandwiched in a pinched state between the press roll 16 and the heating roll 17 of the laminator, thus being laminated.

(Multilayer complex for adhesive strength measurement)

The sample for the adhesive strength (180° T-type adhesive strength) was prepared, under the above-described conditions, by releasing the press roll 16 and the heating roll 17 and picking the laminated one in a stage when about 5 cm from the tips of the multilayer film 1c (1a, 1b) and the base fabric 2 have been laminated.

<Roll laminator specification>

- Metallic heating roll diameter: φ100 mm, roll face length: 540 mm, surface: specular working
- Press roll diameter: φ100 mm, roll face length: 540 mm, surface: silicone rubber lining application
- Pressurizing cylinder diameter: φ50 mm $\times$ 2 pieces

<Lamination condition>

- Temperature 160 °C
- Linear pressure 15 N/cm (setting gauge pressure = 0.2 MPa)
- Processing speed 0.3 m/min

3. "Evaluation method"

The following describes the evaluation method used in Examples and Comparative Examples.

(1) Evaluation method for composition analysis and thermal property of multilayer film

(Glass-transition temperature Tg)

A sheet with a thickness of 0.9 mm was produced using the components of the respective layers that constitute the multilayer film in a press forming machine "P2-30T-400" made by Toyo Seiki Seisaku-Sho, Ltd., and the loss tangent tan $\delta$ was measured in the dynamic viscoelastic measuring machine ("MCR301" made by Anton Paar GmbH), setting the peak temperature of loss tangent tan $\delta$ as the glass-transition temperature.

- Measurement mode: torsion (measurement attachment: SRF10)
- Sample: thickness = 0.9 mm, width = 10 mm, measuring span = 38 mm

- Normal force: -0.3 N
- Oscillation angle: 0.1 %
- Frequency: 1 Hz
- Heating rate: 2 °C/min

(Melting point Tm)

A sheet with a thickness of 150 μm was produced using the components of the respective layers that constitute the multilayer film in the press forming machine "P2-30T-400" made by Toyo Seiki Seisaku-Sho, Ltd., 10 mg weight of the sheet was taken, and the melting peak temperature obtained at a heating rate of 10 °C/min, which is compliant with JIS K 7121, using the DSC ("Diamond DSC" made by PerkinElmer, Inc.) was set as the melting point. The sample was taken according to the following press forming conditions.

(2) Evaluation method for adhesive strength

For the measurement of the adhesive strength (180° T-type peel strength), an airbag multilayer complex prepared in accordance with the section "Method of producing airbag multilayer complex" (multilayer complex for adhesive strength measurement) was used. In the adhesive strength measurement of the sample, "Super strong line tape for business use, part number: RM-605" sold by Shinfuji Burner co., ltd. was stuck to the surface of the film outer layer to be reinforced in order to reduce the stretch of the film as much as possible during the measurement. Five samples cut to 80 mm were prepared for each adhesive strength measurement, such that a part with 10 mm in the TD direction of the multilayer film (the weft direction of the base fabric) and 20 mm at the end in in the MD direction of the multilayer film (the warp direction of the base fabric) becomes an adhesion part. Then, the T-type 180° peeling test (see FIG. 1) was conducted five times in a tensile tester ("Autograph AG-IS" made by Shimadzu Corporation) to set the average of the respective maximum values as the adhesive strength.

<Adhesive strength measurement condition>

- State adjustment of sample: stored at 23 °C and 50 %RH for two days
- Peel test: 23 °C and 50 %RH
- Distance between chucks: 30 mm (attached such that the adhesion part is in the center between the chucks)
- Peel rate: 5 mm/min

(3) Evaluation method for loop stiffness

For the measurement of the loop stiffness, an airbag multilayer complex prepared in accordance with the section "Method of producing airbag multilayer complex" (multilayer complex for loop stiffness measurement) was used. Five samples were taken from this airbag multilayer complex, each with a size of 20 mm in the TD direction of the multilayer film (the weft direction of the Ny66 base fabric) and 120 mm in the MD direction of the multilayer film (the warp direction of the Ny66 base fabric). The sample was set on a sample stand such that the multilayer film side is outside of the loop in the loop stiffness tester (made by Toyo Seiki Seisaku-Sho, Ltd.), measuring the compression stress of the loop (see FIG. 2). The loop stiffness of the Ny66 base fabric was measured by taking the sample for measurement with a similar size in an unprocessed state without histories of the heat and pressure by the laminator.

The value of the loop stiffness was determined by obtaining the average of the values of five samples measured at different positions and converting it into a value with a width of 1 cm.

When the loop stiffness of the airbag multilayer complex is measured, the loop stiffness can be obtained by taking the sample in the same manner as above using a site without deformation and damage. The loop stiffness of the base fabric in this multilayer complex may be lower than that in the unprocessed state due to the histories of the heat and pressure during the lamination, as well as the opening of the base fabric by peeling the multilayer film. In this case, using the following procedures (a) to (d), the loop stiffness of the base fabric itself is calculated.

(a) Specify the components of the base fabric in the airbag multilayer complex by the infrared spectrophotometry (FT-IR).
(b) Specify the fiber structure (weight per unit area, thickness, fineness, and fiber density) by analyzing the cross section of this multilayer complex using an SEM.
(c) Separately produce a base fabric having components and a fiber structure (weight per unit area, thickness, fineness, and fiber density) comparable to those of the base fabric specified in (a) and (b) above.
(d) Measure the loop stiffness of the so-called replicated base fabric separately produced in (c) above.

This can obtain the difference in loop stiffness between the airbag multilayer complex and the base fabric.

<Loop stiffness measurement condition>

- State adjustment of sample: 23 °C, 50 %RH, and 24 hours or more
- Test environment: 23 °C and 50 %RH
- Sample size: 20 mm width × 120 mm length
- Measuring speed: 3.3 mm/sec

(4) Evaluation method for scrub resistance

Using a scrub tester (made by Imoto Machinery Co., Ltd.), the test was conducted according to ISO5981. The number of tests when the film began to peel off from the airbag multilayer complex in Examples and Comparative Examples was counted. The test was repeated four times for each sample to obtain the average value.

<Scrub tester specification and test condition>

- Test load foot (10 mm width) = 5 N, additional load =10 N added
- Reciprocating speed 2.3 times/sec
- State adjustment of sample 23 °C, 50 %RH, and 24 hours or more
- Test environment 23 °C and 50 %RH
- Criterion of the number of scrubs (average value)

Number of times when the peeling starts: 1 to 299 times: Poor
Number of times when the peeling starts: 300 to 599 times: Fair
Number of times when the peeling starts: 600 to 999 times: Good
Number of times when the peeling starts: 1000 times or more: Excellent

(5) Evaluation method for layer ratio and film thickness

The method of measuring the thickness of the multilayer film was conducted using a dial gauge (SM-1201 made by TECLOCK Co., Ltd., gauge head φ2).
Each layer ratio of the multilayer film can be determined such that two polypropylene sheets (size: 5 mm × 10 mm) with a thickness of 1 mm, with one side surface to which the EVA adhesive is applied, are prepared, the multilayer film is sandwiched between the two sheets such that the EVA adhesive surfaces are inside to be integrated, a section with a thickness of 5 μm to 10 μm is picked from this cross section by the microtome, and the cut surface of the section is magnified by the polarization microscopy, thus enabling the thickness of each layer to be measured using the image analysis software.

(6) Composition analysis and thermal property measurement method of multilayer film

In the multilayer film having the adhesive layer and the outer layer, the method of specifying the components contained in the adhesive layer includes, for example, methods specified by the infrared spectrophotometry (FT-IR) and the NMR method. As another method of obtaining the melting point and the crystallization temperature, when the multilayer film is a film with two layers of two types consisting of the adhesive layer the outer layer, the melting point and the crystallization temperature can also be obtained in accordance with the above-described method of measuring the melting point by directly sampling the multilayer film to the desired size. In the case of the multilayer film with three layers or more of three types ore more, in which the multilayer film has the middle layer between the adhesive layer and the outer layer, the melting point and the crystallization temperature can also be obtained in accordance with the above-described method of measuring the melting point, using a solid content obtained by immersing the multilayer film in a solvent (for example, hexafluoro-2-propanol) in which only the adhesive layer can be extracted and separating the obtained solution into the solvent and the solid content by an evaporator.

(7) Calculation of ΔHSP value

The HSPs of the first resin and the other resins contained in the adhesive layer and the HSP of the base fabric, which have been used in Examples and Comparative Examples, were determined by performing analysis in the NMR and the FT-IR and performing calculation based on the obtained composition ratio using "Winmostar version 9.3.0". The results are indicated in Table 1.

(Example 1)

It was obtained a multilayer film with five layers of four types with a thickness of 20 μm, which consists of the outer layer (20 %), the glue layer (10 %), the middle layer (50 %), the glue layer (10 %), and the adhesive layer (10 %) and uses a polyamide-based copolymer consisting of CoPA1 (PA6/12) for the adhesive layer. Here, the numerical value in parenthesis above indicates the layer ratio. This multilayer film was laminated on a nylon 66 (Ny66) base fabric at a temperature of 160 °C, a linear pressure of 15 N/cm (setting gauge pressure = 0.2 MPa), and a speed of 0.3 m/min to produce an airbag multilayer complex (1), evaluating the performance. The constitutions of the multilayer film and the airbag multilayer complex, and the evaluation results are indicated in Table 1. From the result in Table 1, good results were obtained in the flexibility, the adhesion, and the scrub resistance of the airbag multilayer complex in Example 1.

In the resin composition column in Table 1, "symbol = number" means that "the symbol represents the resin name described in the above-described section 'Raw material', and number represents the content of this resin". Therefore, for example, "PA6/66 = 100" corresponding to the outer layer in Example 1 in Table 1 means that "a raw material (product) containing 80 mass% or more of a polyamide-based copolymer of PA6 and PA66 is used, and 100 mass% of this raw material is contained". In the resin composition column in Table 1, "-" means that this layer is not disposed.

(Example 2)

It was obtained a film with five layers of four types with a thickness of 15 μm by increasing the layer ratio of the adhesive layer in Example 1 from 10 % to 20 % and decreasing the middle layer from 50 % to 40 %. Using this multilayer film, an airbag multilayer complex (2) was produced similarly to Example 1, evaluating the performance. The constitutions of the multilayer film and the airbag multilayer complex, and the evaluation results are indicated in Table 1. The experimental result of the airbag multilayer complex (2) confirmed that the flexibility (difference in loop stiffness) was improved compared with that of the airbag multilayer complex (1) in Example 1 and this improved the scrub resistance.

(Example 3)

It was obtained a film with five layers of four types with a thickness of 20 μm by increasing the layer ratio of the adhesive layer in Example 1 from 10 % to 50 % and decreasing the middle layer from 50 % to 10 %. Using this multilayer film, an airbag multilayer complex (3) was produced similarly to Example 1, evaluating the performance. The constitutions of the multilayer film and the airbag multilayer complex, and the evaluation results are indicated in Table 1. In the experimental result of this airbag multilayer complex (3), the flexibility reduced compared with that in Example 1, and the scrub resistance also reduced accordingly, but the performance of 600 times or more was obtained.

(Example 4)

It was obtained a multilayer film with five layers of four types with a thickness of 40 μm using a composition in which 50 mass% of m-PE1 (acid-modified PE) was blended into the adhesive layer. Using this multilayer film, an airbag multilayer complex (4) was produced similarly to Example 1, evaluating the performance. The constitutions of the multilayer film and the airbag multilayer complex, and the evaluation results are indicated in Table 1. In the experimental result of this airbag multilayer complex (4), the adhesive strength did not reduce even by blending m-PE1 into the adhesive layer, and the performance of 600 times or more was obtained for the scrub resistance.

(Example 5)

It was obtained a multilayer film with two layers of two types with a thickness of 20 μm, which consists of the outer layer and the adhesive layer. Using this multilayer film, an airbag multilayer complex (5) was produced similarly to Example 1, evaluating the performance. The constitutions of the multilayer film and the airbag multilayer complex, and the evaluation results are indicated in Table 1. The experimental result of this airbag multilayer complex (5) confirmed that the flexibility reduced compared with that in Example 1, and the scrub resistance also reduced accordingly, but the performance of 600 times or more was obtained.

(Example 6)

It was produced a multilayer film similarly to Example 5 except for using H-TPAE (high-melting-point thermoplastic polyamide elastomer) for the outer layer. Using this multilayer film, an airbag multilayer complex (6) was produced similarly to Example 1, evaluating the performance. The constitutions of the multilayer film and the airbag multilayer complex, and the evaluation results are indicated in Table 1. In the experimental result of this airbag multilayer complex (6), the performance almost equivalent to that in Example 5 was obtained in the flexibility, the adhesion, and the scrub resistance.

(Example 7)

It was produced a film with three layers of three types consisting of the outer layer (20 %), the middle layer (70 %), and the adhesive layer (10 %), which is a multilayer film with a thickness of 20 $\mu$m using PA6/66 for the outer layer, m-PE for the middle layer, and Co-PA1 for the adhesive layer. Using this multilayer film, an airbag multilayer complex (7) was produced similarly to Example 1, evaluating the performance. The constitutions of the multilayer film and the airbag multilayer complex, and the evaluation results are indicated in Table 1. In the experimental result of this airbag multilayer complex (7), the performance equivalent to or more than that in Example 1 was obtained in the flexibility, the adhesion, and the scrub resistance.

(Example 8)

It was produced a film with three layers of three types with a thickness of 20 $\mu$m similarly to Example 7 except for using Co-PA2 for the adhesive layer. Using this multilayer film, an airbag multilayer complex (8) was produced similarly to Example 1, evaluating the performance. The constitutions of the multilayer film and the airbag multilayer complex, and the evaluation results are indicated in Table 1. In the experimental result of this airbag multilayer complex (8), the flexibility of the film improved compared with that in Example 7, exhibiting good scrub resistance.

(Comparative Example 1)

It was produced a multilayer film with five layers of four types having a layer constitution identical to that in Example 1 except for changing the thickness from 20 $\mu$m to 40 $\mu$m. Using this multilayer film, an airbag multilayer complex (A) in Comparative Example 1 was produced similarly to Example 1, evaluating the performance. The constitutions of the multilayer film and the multilayer complex (A), and the evaluation results are indicated in Table 1. In the experimental result in Comparative Example 1, while the thickness increased, the flexibility reduced compared with that in Example 1, and the scrub resistance reduced to 275 times accordingly.

(Comparative Example 2)

It was obtained a multilayer film identical to that in Example 1 except for increasing the layer ratio of the adhesive layer in Example 1 from 10 % to 40 % and increasing the thickness from 20 $\mu$m to 35 $\mu$m. Using this multilayer film, an airbag multilayer complex (B) in Comparative Example 2 was produced similarly to Example 1, evaluating the performance. The constitutions of the multilayer film and the multilayer complex (B), and the evaluation results are indicated in Table 1. In the experimental result in Comparative Example 2, the layer ratio and the thickness of the adhesive layer increased compared with those in Example 1 to reduce the flexibility, and the scrub resistance reduced to 325 times accordingly.

(Comparative Example 3)

It was obtained a multilayer film with two layers of two types with a thickness of 40 $\mu$m consisting of H-TPAE (high-melting-point thermoplastic polyamide elastomer) and L-TPAE (low-melting-point thermoplastic polyamide elastomer). Using this multilayer film, an airbag multilayer complex (C) in Comparative Example 3 was produced similarly to Example 1, evaluating the performance. The constitutions of the multilayer film and the multilayer complex (C), and the evaluation results are indicated in Table 1. In the experimental result in Comparative Example 3, the flexibility was poor, and the scrub resistance also reduced to 200 times.

| Table 1 | | Unit | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|---|
| Resin composition | Outer laver | mass% | PA6/66=100 | PA6/66=100 | PA6/66=100 | PA6/66=100 | PA6/66=100 | H-TPAE=100 | PA6/66=100 | PA6/66=100 | PA6/66=100 | PA6/66=100 | H-TPAE=100 |
| | Grue layer | | m-PE1=100 | m-PE1=100 | m-PE1=100 | m-PE1=100 | - | - | - | - | m-PE1=100 | m-PE1=100 | - |
| | Middle layer | | LLDPE=50 OBC=50 | LLDPE=50 OBC=50 | LLDPE=50 OBC=50 | LLDPE=50 OBC=50 | - | - | m-PEI=100 | m-PEI=100 | LLDPE=50 OBC=50 | LLDPE=50 OBC=50 | - |
| | Grue layer | | m-PEI=100 | m-PE1=100 | m-PEI=100 | m-PE1=100 | - | - | - | - | m-PE1=100 | m-PE1=100 | - |
| | Adhesive layer | | Co-PA 1 =98 AB=1.5 NA=0.5 | Co-PAI =98 AB=1.5 NA=0.5 | Co-PAI =98 AB=1.5 NA=0.5 | Co-PA1=48 m-PEI=50 AB=1.5 NA=0.5 | Co-PA1=98 AB=1.5 NA=0.5 | Co-PA1=98 AB=1.5 NA=0.5 | Co-PA1=98 AB=1.5 NA=0.5 | Co-PA2=98 AB=1.5 NA=0.5 | Co-PA1=98 AB=1.5 NA=0.5 | Co-PA1=98 AB=1.5 NA=0.5 | L-TPAE=98 AB=1.5 NA=0.5 |
| Layer ratio | Outer laver | % | 20 | 20 | 20 | 20 | 50 | 50 | 20 | 20 | 20 | 20 | 50 |
| | Grue layer | | 10 | 10 | 10 | 10 | | | - | - | 10 | 10 | - |
| | Middle layer | | 50 | 40 | 10 | 40 | | | 70 | 70 | 50 | 20 | - |
| | Grue layer | | 10 | 10 | 10 | 10 | | | - | - | 10 | 10 | - |
| | Adhesive laver | | 10 | 20 | 50 | 20 | 50 | 50 | 10 | 10 | 10 | 40 | 50 |
| Average thickness of multilayer film | | μm | 20 | 15 | 20 | 40 | 20 | 20 | 20 | 20 | 40 | 35 | 40 |
| Laminate condition | Temperature | °C | 160 | | | | | | | | | | |
| | Linear pressure | N/cm | 15 | | | | | | | | | | |
| | Speed | m/min | 0.3 | | | | | | | | | | |
| Glass-transition temperature of adhesive layer component consisting of adhesive layer (Tg) (*1) | | °C | 47 | 47 | 47 | 29 | 47 | 47 | 47 | 40 | 47 | 47 | -43 |

| Table 1 | | Unit | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|---|
| Loop stiffness | Airbag multilayer complex | mN/cm | 194 | 191 | 235 | 240 | 239 | 241 | 236 | 200 | 284 | 278 | 272 |
| | Base fabric | | 114 | 114 | 114 | 114 | 114 | 114 | 114 | 114 | 114 | 114 | 114 |
| | Difference (Airbag multilayer complex - Base fabric) | | 80 | 77 | 121 | 126 | 125 | 127 | 122 | 86 | 170 | 164 | 158 |
| Adhesive strength (180° T-tvpe peel strength) | | N/cm | 9.2 | 6.6 | 7.2 | 9.0 | 7.9 | 5.8 | 5.7 | 6 | 10.3 | 9.3 | 6.2 |
| Scrub resistance | | (): Number of times when peeling starts | Excellent (1200) | Excellent (1300) | Good (700) | Good (600) | Good (600) | Good (600) | Excellent (1350) | Excellent (1700) | Poor (275) | Fair (325) | Poor (200) |
| Hansen solubility parameter (HSP) | HSP (Base fabric) | MPa$^{0.5}$ | 25.2 | | | | | | | | | | |
| | HSP (Adhesive laver) | | 21.9 | | | | | | | | 21.8 | 21 .9 | 18.1 |
| | ΔHSP | | 3.3 | | | | | | | | 3.4 | 3. .3 | 7.1 |

(*1) When there is a plurality of peaks derived from the glass-transition temperature of the resin in the adhesive layer component, the peak temperature on the highest temperature side was set as the glass-transition temperature (Tg).

EP 4 101 634 B1

As indicated in Table 1, the scrub resistance depends on the adhesive strength and the flexibility of the film, and the scrub resistance (the durability) to meet practical use is obtained by setting the adhesive strength to 5 N/cm or more and the flexibility of the film (laminate base fabric - base fabric) to 130 mN/cm or less.

INDUSTRIAL APPLICABILITY

Our multilayer complex is excellent in adhesion, airtightness, durability, flexibility, and lightweight properties and can achieve inexpensive manufacturing cost, thus it can be preferably used for airbag applications, including for vehicles.

REFERENCE SIGNS LIST

| | |
|---|---|
| 1 | multilayer compound laminated body |
| 1a | multilayer film (outer layer) |
| 1b | multilayer film (adhesive layer) |
| 1c | multilayer film |
| 2 | base fabric |
| 3 | indenter |
| 4 | chuck of loop stiffness |
| 5 | sample stand |
| 6 | reinforcing tape |
| 7 | chuck of tensile tester |
| 8 | multilayer die |
| 9 | airing |
| 10 | deflator (free roll) |
| 11 | first pinch drive roll |
| 12 | guide roll (free roll) |
| 13 | second pinch drive roll |
| 14 | touch roll (free roll) |
| 15 | rolling drive roll |
| 16 | press roll (silicone rubber lining application) |
| 17 | metallic heating roll (specular working) |

**Claims**

1. An airbag multilayer complex comprising a base fabric and a multilayer film including an outer layer and an adhesive layer that is bonded to one surface of the base fabric, wherein
the adhesive strength of the interface between the multilayer film and the base fabric is 5 N/cm or more, the difference in loop stiffness between the airbag multilayer complex and the base fabric is 130 mN/cm or less, the adhesive layer contains a first resin having a hydrogen-bonding capacity and a glass-transition temperature of 20 °C or more, and the difference in Hansen solubility parameter ($\Delta$HSP) between the base fabric and the first resin is 5 MPa$^{0.5}$ or less; and wherein:

   (a) adhesive strength of the interface between the multilayer film and the base fabric is calculated in accordance with the method disclosed in the description;
   (b) difference in loop stiffness is calculated in accordance with the method disclosed in the description;
   (c) glass-transition temperature is calculated in accordance with the method disclosed in the description and
   (d) the difference in Hansen solubility parameter ($\Delta$HSP) is calculated in accordance with the method disclosed in the description

2. The airbag multilayer complex according to claim 1, wherein the first resin is a polyamide-based copolymer of two or more types selected from polyamide 6, polyamide 66, polyamide 610, polyamide 11, and polyamide 12, and/or a dimer acid-based polyamide.

3. The airbag multilayer complex according to any one of claims 1 or 2, wherein the outer layer contains a second resin, and the second resin has a melting point 20 °C or more than a melting point of the first resin, wherein the melting point is calculated in accordance with the method disclosed in the description

4. The airbag multilayer complex according to any one of claims 1 to 3, wherein the second resin contains a polyamide-based copolymer and/or a polyamide-based elastomer.

5. The airbag multilayer complex according to any one of claims 1 to 4, comprising a middle layer between the outer layer and the adhesive layer, wherein the middle layer contains a third resin, and the third resin is a polyolefin-based resin having polarity.

6. The airbag multilayer complex according to any one of claims 1 to 5, wherein the multilayer film has an average thickness of 40 $\mu$m or less.

7. The airbag multilayer complex according to any one of claims 1 to 6, wherein the base fabric is a polyamide fiber.

8. An airbag formed from the airbag multilayer complex according to any one of claims 1 to 7.


**Patentansprüche**

1. Mehrschichtiger Airbag-Verbundstoff umfassend ein Grundgewebe und einen mehrschichtigen Film, der eine äußere Schicht und eine Klebstoffschicht, die an eine Oberfläche des Grundgewebes gebunden ist, umfasst, wobei die Haftstärke der Grenzfläche zwischen dem mehrschichtigen Film und dem Grundgewebe 5 N/cm oder mehr beträgt, der Unterschied der Schleifensteifigkeit zwischen dem mehrschichtigen Airbag-Verbundstoff und dem Grundgewebe 130 mN/cm oder weniger beträgt, die Klebstoffschicht ein erstes Harz mit einer Wasserstoffbrückenkapazität und einer Glasübergangstemperatur von 20 °C oder mehr enthält und der Unterschied des Hansen-Löslichkeitsparameters ($\Delta$HSP) zwischen dem Grundgewebe und dem ersten Harz 5 MPa$^{0,5}$ oder weniger beträgt; und wobei:

(a) die Haftstärke der Grenzfläche zwischen dem mehrschichtigen Film und dem Grundgewebe gemäß dem in der Beschreibung offenbarten Verfahren berechnet wird;
(b) der Unterschied der Schleifensteifigkeit gemäß dem in der Beschreibung offenbarten Verfahren berechnet wird;
(c) die Glasübergangstemperatur gemäß dem in der Beschreibung offenbarten Verfahren berechnet wird und
(d) der Unterschied des Hansen-Löslichkeitsparameters ($\Delta$HSP) gemäß dem in der Beschreibung offenbarten Verfahren berechnet wird.

2. Mehrschichtiger Airbag-Verbundstoff gemäß Anspruch 1, wobei das erste Harz ein Copolymer auf Polyamidbasis von zwei oder mehr Typen ausgewählt aus Polyamid 6, Polyamid 66, Polyamid 610, Polyamid 11 und Polyamid 12 und/oder ein Polyamid auf Dimersäurebasis ist.

3. Mehrschichtiger Airbag-Verbundstoff gemäß einem der Ansprüche 1 und 2, wobei die äußere Schicht ein zweites Harz enthält und das zweite Harz einen Schmelzpunkt von 20 °C oder mehr als ein Schmelzpunkt des ersten Harzes aufweist, wobei der Schmelzpunkt gemäß dem in der Beschreibung offenbarten Verfahren berechnet wird.

4. Mehrschichtiger Airbag-Verbundstoff gemäß einem der Ansprüche 1 bis 3, wobei das zweite Harz ein Copolymer auf Polyamidbasis und/oder ein Elastomer auf Polyamidbasis enthält.

5. Mehrschichtiger Airbag-Verbundstoff gemäß einem der Ansprüche 1 bis 4, umfassend eine mittlere Schicht zwischen der äußeren Schicht und der Klebstoffschicht, wobei die mittlere Schicht ein drittes Harz enthält und das dritte Harz ein Harz auf Polyolefinbasis mit Polarität ist.

6. Mehrschichtiger Airbag-Verbundstoff gemäß einem der Ansprüche 1 bis 5, wobei der mehrschichtige Film eine mittlere Dicke von 40 $\mu$m oder weniger aufweist.

7. Mehrschichtiger Airbag-Verbundstoff gemäß einem der Ansprüche 1 bis 6, wobei das Grundgewebe eine Polyamidfaser ist.

8. Airbag, gebildet aus dem mehrschichtigen Airbag-Verbundstoff gemäß einem der Ansprüche 1 bis 7.

**Revendications**

1. Complexe multicouche de coussin de sécurité gonflable comprenant un tissu de base et un film multicouche comprenant une couche extérieure et une couche d'adhésif qui est liée à une surface du tissu de base,
la force adhésive de l'interface entre le film multicouche et le tissu de base étant de 5 N/cm ou plus, la différence de rigidité des boucles entre le complexe multicouche de coussin de sécurité gonflable et le tissu de base étant de 130 mN/cm ou moins, la couche d'adhésif contenant une première résine ayant capacité de liaisons hydrogène et une température de transition vitreuse de 20 °C ou moins, et la différence du paramètre de solubilité de Hansen (ΔHSP) entre le tissu de base et la première résine étant de 5 MPa$^{0,5}$ ou moins ; et

(a) la force adhésive de l'interface entre le film multicouche et le tissu de base étant calculée conformément au procédé divulgué dans la description ;
(b) la différence de rigidité des boucles étant calculée conformément au procédé divulgué dans la description ;
(c) la température de transition vitreuse étant calculée conformément au procédé divulgué dans la description et
(d) la différence du paramètre de solubilité de Hansen (ΔHSP) étant calculée conformément au procédé divulgué dans la description.

2. Complexe multicouche de coussin de sécurité gonflable selon la revendication 1, la première résine étant un copolymère à base de polyamide de deux types ou plus choisi parmi un polyamide 6, un polyamide 66, un polyamide 610, un polyamide 11 et un polyamide 12, et/ou un polyamide à base d'acide dimérique.

3. Complexe multicouche de coussin de sécurité gonflable selon l'une quelconque des revendications 1 ou 2, la couche extérieure contenant une deuxième résine, et la deuxième résine ayant un point de fusion de 20 °C ou plus qu'un point de fusion de la première résine, le point de fusion étant calculé conformément au procédé divulgué dans la description.

4. Complexe multicouche de coussin de sécurité gonflable selon l'une quelconque des revendications 1 à 3, la deuxième résine contenant un copolymère à base de polyamide et/ou un élastomère à base de polyamide.

5. Complexe multicouche de coussin de sécurité gonflable selon l'une quelconque des revendications 1 à 4, comprenant une couche intermédiaire entre la couche extérieure et la couche d'adhésif, la couche intermédiaire contenant une troisième résine, et la troisième résine étant une résine à base de polyoléfine ayant une polarité.

6. Complexe multicouche de coussin de sécurité gonflable selon l'une quelconque des revendications 1 à 5, le film multicouche ayant une épaisseur moyenne de 40 μm ou moins.

7. Complexe multicouche de coussin de sécurité gonflable selon l'une quelconque des revendications 1 à 6, le tissu de base étant une fibre de polyamide.

8. Coussin de sécurité gonflable formé à partir du complexe multicouche de coussin de sécurité gonflable selon l'une quelconque des revendications 1 à 7.

# FIG. 1

# FIG. 2

Adhesion area=10mm(W) × 20mm(L)

30mm

# FIG. 3

FIG. 4

EP 4 101 634 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000296748 A
- EP 1518761 A
- WO 9841398 A1
- EP 1518761 A1
- JP 2008150754 A
- KR 20140087848 A